## Europäisches Patentamt
## European Patent Office
## Office européen des brevets

(19)

(11) Veröffentlichungsnummer: **0 124 890**
**A1**

(12) # EUROPÄISCHE PATENTANMELDUNG

(21) Anmeldenummer: 84105027.1

(22) Anmeldetag: 04.05.84

(51) Int. Cl.$^3$: **C 21 C 5/56**
**C 21 C 5/28**

(30) Priorität: 05.05.83 DE 3316367

(43) Veröffentlichungstag der Anmeldung:
14.11.84 Patentblatt 84/46

(84) Benannte Vertragsstaaten:
AT BE FR GB IT LU NL SE

(71) Anmelder: MANNESMANN Aktiengesellschaft
Mannesmannufer 2
D-4000 Düsseldorf 1(DE)

(72) Erfinder: Gorjup, Johann
Lahnstrasse 23
D-4100 Duisburg 1(DE)

(72) Erfinder: Pleschiutschnigg, Fritz P., Dr.-Ing.
Reiserweg 69
D-4100 Duisburg(DE)

(72) Erfinder: von Schnakenburg, Joachim, Dipl.-Ing.
Heideweg 12
D-4152 Kempen(DE)

(54) **Verfahren und Einrichtung zum Erzeugen von Stahl.**

(57) Verfahren und eine Einrichtung zum Erzeugen von Stahl in mehreren Stufen unter Bilden von Reaktionsschlacken und unter Ein- bzw. Durchblasen von gasförmigem Sauerstoff oder unter Zugabe von Sauerstoffträgern wobei die Behandlung der Schmelze vom Hochofen (1) bis zur Stranggießanlage (4) auf einer direkten Linie (5 bzw. 6 bzw. 7) in metallurgischen Verfahrensstufen durchgeführt wird und wobei ferner der metallurgische Behälter (16) für das Entkohlen bei einem über die Schrottbasis erforderlichen Volumen des metallurgischen Behälters (16), resultierend aus der restlichen Schlackenarbeit, auf einen zusätzlichen Volumenzuschlag abgestellt, d.h. begrenzt ist. Das Volumen des metallurgischen Behälters (16) entspricht dem Stahlvolumen und einem Gasvolumen bei größter Frischgeschwindigkeit und bestimmt sich nach dem maximalen Wert der Funktion $dCO/dt = f$ (delta V).

EP 0 124 890 A1

./...

FIG. 2

0124890

Die Erfindung betrifft ein Verfahren und eine Einrichtung zum
Erzeugen von Stahl in mehreren Stufen unter Bilden von Reaktionsschlacken und unter Ein- bzw. Durchblasen von gasförmigem Sauerstoff oder unter Zugabe von Sauerstoffträgern.

Ein solches Verfahren steht im Gegensatz zum herkömmlichen
Konverterverfahren, das durch die unterschiedlichsten Blastechniken, sei es Aufblastechnik oder Boden-Durchblastechnik, variiert
werden kann. Das Aufblasen oder Durchblasen von Sauerstoff und das
Durchblasen von Inertgasen (Argon, Stickstoff) dient letztlich der
Verbesserung des Verfahrensablaufs mit den Nebenwirkungen auf die
Einrichtungsteile sowie der Verbesserung des Endproduktes Stahl.
Alle bekannten Variationen des LD-Prozesses, wie z.B. Variation
der Spülgasmenge, Verbesserung der CO/CO2-Nachverbrennung, der
Schlackenführung, der erzielten Entphosphorungs- und Entschwefelungsgrade, der Senkung des Mangan-Abbrandes und dergl., bessere
Stahlqualiäten bei geringeren Herstellkosten, Variationen des
Schrottsatzes im Konverter, zwingen insgesamt jedoch zur Einhaltung vorgeschriebener Werte der Menge an Rohmaterialien in
einem vorhandenen Konvertergefäß. Mit dem abgeschlossenen Bau
eines Konverterblasstandes können die Bedingungen für eine
flexible, an den Bedarf angepaßte Stahlerzeugung im Konverter nur
noch unter äußersten Anstrengungen und nur sehr unvollkommen
erfüllt werden. Der LD-Prozeß ist daher trotz aufsteigender
Tendenz in bedeutenden Industriestaaten hinsichtlich der
Produktion von Massenstahl einerseits und von Qualitätsstählen
andererseits im Konverter nur wenig flexibel durchführbar, soweit
die Änderung der Menge und der Zusammensetzung angesprochen sind.

Das der Gattung zugrundeliegende Verfahren ist aus der DE-PS
29 42 779 insoweit bekannt, als auf der Basis von Roheisen
gearbeitet wird. Das bekannte Verfahren berücksichtigt daher nicht
eine Rohstoffbasis, bestehend aus Roheisen und/oder Schrott.

• • • • •

Der Erfindung liegt die Aufgabe zugrunde, das stufenweise
Erschmelzen des Stahles im Gegensatz zum Konverter-Verfahren zu
optimieren, d. h. für alle Rohstoff-Zusammensetzungen und Endprodukte ein flexibleres Verfahren anwendbar zu gestalten, wobei
für ein hochqualitatives Produkt geringstmögliche Kosten
anzustreben sind.

Die gestellte Aufgabe wird dadurch gelöst, daß die Behandlung der
Schmelze vom Hochofen bis zur Stranggießanlage auf einer direkten
Linie in metallurgischen Verfahrensstufen durchgeführt wird und
daß ferner der metallurgische Behälter für das Entkohlen bei einem
über die Schrottbasis erforderlichen Volumen des metallurgischen
Behälters, resultierend aus der restlichen Schlackenarbeit, auf
einen zusätzlichen Volumenzuschlag abgestellt ist. Mit diesem
Verfahren entfällt zunächst der herkömmliche Konverterblasstand
gänzlich. Die Stahlerzeugung wird flexibler im Hinblick auf kurzfristig vorzunehmende Änderungen der Produktionsmengen sowie der
einzelnen Qualitäten. Außerdem wird bei einem derartigen Mehrstufenverfahren die Prozeßsteuerung wesentlich vereinfacht.
Weitere Vorteile ergeben sich aus den nachfolgend beschriebenen
verfahrenstechnischen Variationen bzw. aus den sich ergebenden
Folgen der Anlagengestaltung.

Praktische Beispiele, die auf jeweils unterschiedlichen Rohstoff-
Zusammensetzungen basieren, werden in Ausgestaltung der Erfindung
wie folgt gekennzeichnet:

Es ist vorgesehen, daß bei einem Roheisenanteil von 95 bis 99 %
und einem Schrottanteil von 1 bis 5 % aus der Schmelze folgende
Elemente in den einzelnen Stufen entfernt werden: Silizium,
Mangan, Phosphor, Schwefel, Kohlenstoff, danach die Schmelze
desoxidiert, legiert, wieder aufgeheizt, entschwefelt und einer
Feinbehandlung unterzogen wird.

.....

Es ist weiter vorgesehen, daß bei einem Schrottanteil von 1 bis
5 % aus der Schmelze folgende Elemente in den einzelnen Stufen
entfernt werden: Silizium, Mangan, Phosphor, Schwefel,
Kohlenstoff, danach die Schmelze desoxidiert, legiert, wieder
aufgeheizt, entschwefelt und einer Feinbehandlung unterzogen
wird.

Es ist weiter vorgesehen, daß bei einem Schrottanteil von 15 bis
95 % und einem Roheisenanteil von 5 bis 85 % aus der Schmelze in
einem einzigen metallurgischen Behälter folgende Elemente in den
einzelnen Stufen entfernt werden: Silizium, Mangan, Phosphor,
Schwefel, Kohlenstoff und danach die Schmelze desoxidiert,
legiert, wieder aufgeheizt, entschwefelt und einer Feinbehandlung
unterzogen wird.

Außerdem wird vorgeschlagen, daß bei einem Schrottanteil von
100 %, Wärme durch Zugabe und Verbrennen von Kohlenstoff zugeführt,
anschließend aus der Schmelze folgende Elemente in den einzelnen
Stufen entfernt werden: Silizium, Mangan, Phosphor, Schwefel,
Kohlenstoff und danach die Schmelze desoxidiert, legiert, wieder
aufgeheizt, entschwefelt und einer Feinbehandlung unterzogen
wird.

Die Einrichtung zur Durchführung des Verfahrens ist dahingehend
gestaltet, daß zwischen dem Hochofen und der Gießbühne einer
Stranggießanlage zumindest ein durchgehendes Gleis vorgesehen ist,
auf dem zumindest ein Transportfahrzeug für zumindest einen
metallurgischen Behälter, insbesondere eine Stahlpfanne,
verfahrbar ist, der ein Volumen aufweist, das dem Stahlvolumen und
einem Gasvolumen bei größter Frischgeschwindigkeit entspricht.
Außer dem Wegfall des konventionellen Konverterblasstandes erschließt die Erfindung die Möglichkeit, Gefäße einfachster
Bauweise zu benutzen, wobei solchen Gefäßen der Vorteil anhängt,
ein schnelles Ersetzen, einen schnellen Austausch sowie unterge-

.....

4.5.83 **0124890**

- 4 -

ordnete Maßnahmen, wie z. B. ein Neuzustellen der Ausmauerung,
leichter vorzunehmen. Die gesamte Stahlerzeugungsanlage wird,
beginnend bei der Roheisenseite, erheblich verkleinert und setzt
daher geringere Investitionskosten voraus. Mit der außerdem
verbundenen erheblichen Energieeinsparung des stufenweisen Stahlerzeugens und der Einsparung an Investitionskosten sind ferner die
Umwandlungskosten vom Rohstoff bis zum Endprodukt wesentlich
geringer.

Eine bessere Zugänglichkeit der einzelnen Einrichtungsgruppen
sowie eine besser überschaubare Einrichtung ergibt sich ferner
dadurch, daß im Verlauf des Gleises zwischen Hochofen und Stranggießanlage für die selektiven Raffinationsstufen jeweils lediglich
die für eine bestimmte Raffinationsstufe erforderlichen
Hilfsmittel, wie z.B. eine heb- und senkbare Sauerstoff-Blaslanze,
eine Zugabevorrichtung, eine Vakuumeinrichtung und dgl. in der
erforderlichen Höhenlage angeordnet sind.

Die Minderbemessung des Stahlerzeugungsgefäßes gegenüber einem
Stahlwerkskonverter ergibt sich hierbei vorteilhafterweise
dadurch, daß sich das zusätzlich zum Stahlvolumen vorgesehene
Gasvolumen innerhalb des Behälters bzw. der Stahlpfanne nach
dem maximalen Wert der Funktion $dCO/dt = f(\mathbf{\Delta} V)$ bestimmt. Obwohl
daher auch der aufgrund der Erfindung angewendete Behälter ein
Maximalvolumen aufweist, kann ein solches Maximalvolumen leicht
durch Austauschen der wesentlich kleineren, unabhängigen Gefäße
erhalten werden.

Ein Ausführungsbeispiel der erfindungsgemäßen Einrichtung ist in
der Zeichnung dargestellt, anhand deren auch das Erfindungsverfahren nachfolgend erläutert wird. Es zeigen:

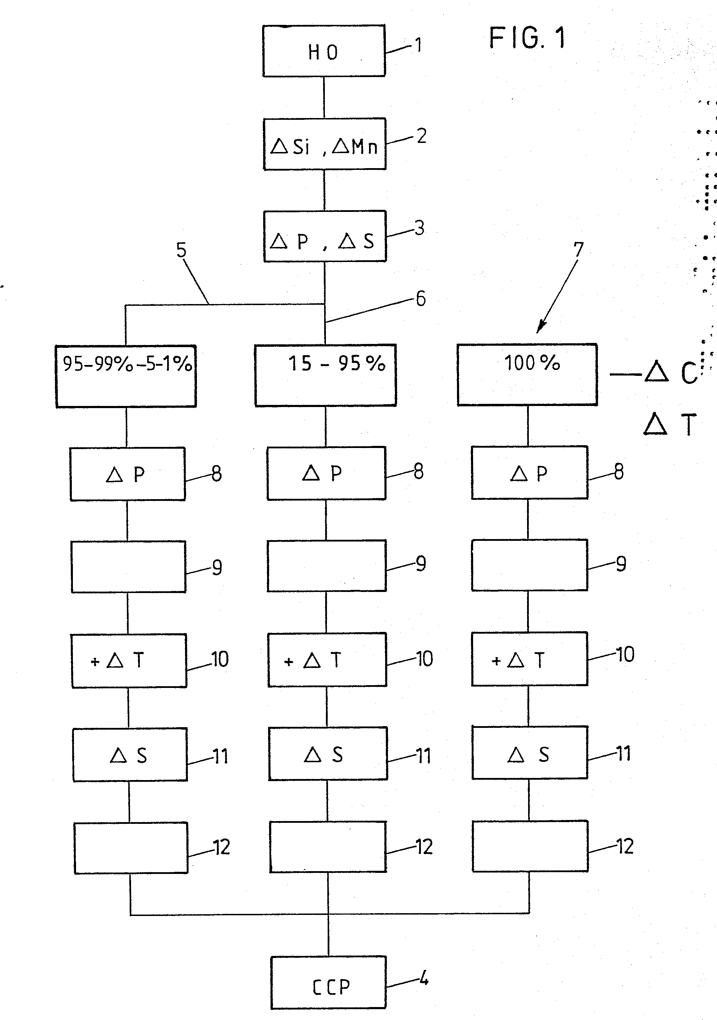

Fig. 1 ein Blockdiagramm der einzelnen Verfahrensstufen der
   Stahlherstellung vom Hochofen bis zur Stranggießanlage,

Fig. 2 einen Grundriß der Einrichtung zwischen Hochofen und
   Stranggießanlage.

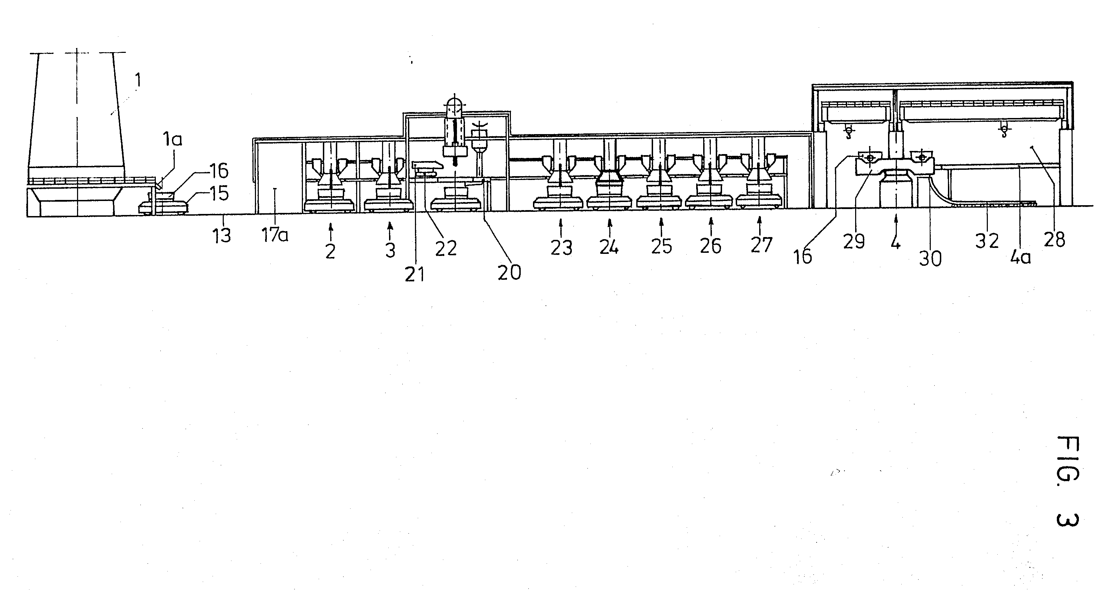

Fig. 3 einen senkrechten Querschnitt durch die Einrichtung längs
   einer der direkten Linien gemäß Fig. 2.

Das aus dem Hochofen 1 abgestochene Roheisen wird in zumindest
zwei weiteren metallurgischen Verfahrensstufen 2 und 3 von
Silizium bzw. Mangan und von Phosphor bzw. Schwefel befreit, wobei
die Verfahrensstufen im Sinn von Vorstufen für weitere Behandlungsstufen zu verstehen sind. Zwischen der Verfahrensstufe 3 und
der Verarbeitung des Stahls in der Stranggießanlage 4 sind im
Ausführungsbeispiel drei direkte Linien 5, 6 und 7 dargestellt,
um den Stahl aufgrund unterschiedlicher Rohstoffzusammensetzungen
für das Stahlstranggießen vorzubereiten.

In der direkten Linie 5 bestehen die Einsatzstoffe aus 95 % bis
99 % Roheisen und aus einem Schrottanteil von 1 bis 5 %. Die
einzelnen Verfahrensstufen bestehen aus der Entphosphorungsstufe
8, der Entgasungs-/Desoxidations- bzw. Legierungsstufe 9, der
Temperaturregulierung 10, der Entschwefelungsstufe 11 und der
Feinbehandlungsstufe 12.

Alternativ wird eine Umstellung auf eine andere Rohstoffbasis
leicht dadurch erreicht, indem in der direkten Linie 6 mit 15 bis
95 % Schrott und mit einem Roheisenanteil von 5 bis 85 % gefahren
wird, wobei die Verfahrensstufen 8 bis 12 wie beschrieben
arbeiten.

. . . . .

Auf eine andere Rohstoffbasis kann nunmehr kurzzfristig umgestellt
werden, indem auf der direkten Linie 7 gearbeitet wird, d. h. auf
der Basis von 100 % Schrott, wobei durch Hinzufügen von Kohlenstoff $\Delta C$ die notwendige Prozeßwärme (dt) erzeugt wird. Daran anschließend ist der Verfahrensgang entsprechend den beschriebenen
Verfahrensstufen 8 bis 12.

Es ist leicht einzusehen, daß die Umstellung auf eine andere
Alternative (direkte Linien 5, 6 oder 7) anders verläuft als im
Konverterblasstand.

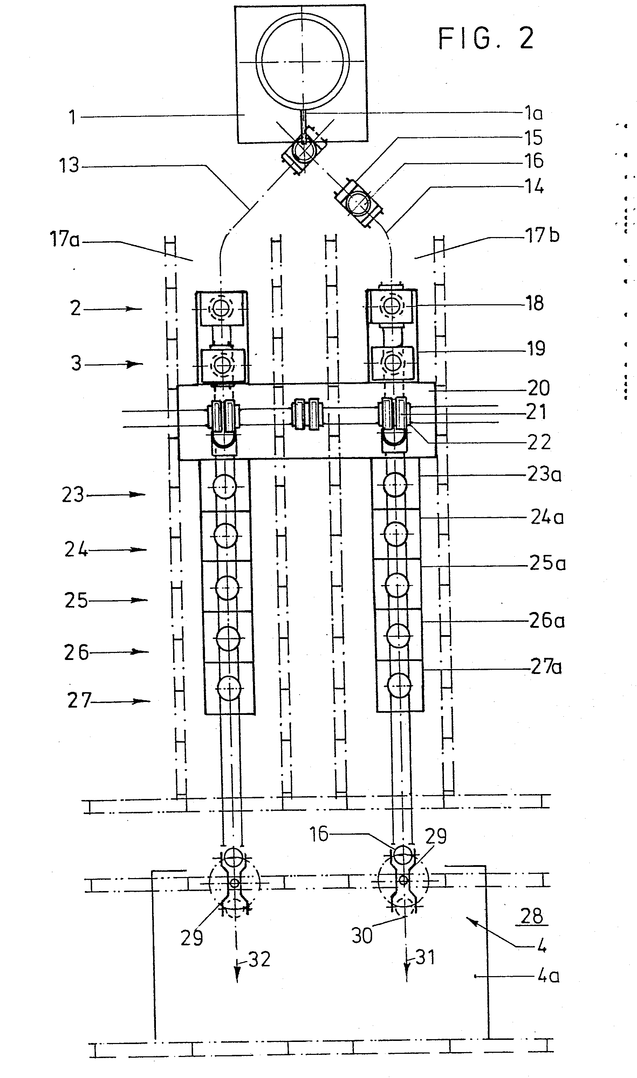

Dementsprechend ist für sämtliche alternativen Linien 5, 6 und 7
die Einrichtung gemäß Fig. 2 zu gebrauchen, ohne daß vorrichtungstechnische Umbauten stattfinden. Die Gleise 13 und 14 führen
durchgehend vom Hochofen 1 bis zur Gießbühne 4a der Stranggießanlage 4. Auf den Gleisen 13 bzw. 14 ist zumindest ein Transportfahrzeug 15 mit dem metallurgischen Behälter 16, z.B. einer
Stahlpfanne, verfahrbar. Das Volumen des erzeugten Stahles
zusammen mit dem Gasvolumen bei einer angenommenen Größe der
Frischgeschwindigkeit bestimmt das Brutto-Volumen des
metallurgischen Behälters 16, so daß rückwärts gerechnet auch
vorhandene metallurgische Behälter 16 auf ihr Fassungsvermögen
untersucht werden können. Damit steht ein großer Park an
vorhandenen metallurgischen Behältern 16 zur Verfügung, und es
bedarf nicht der Schaffung besonders gestalteter metallurgischer
Behälter.

Die aus der Abstichrinne 1a gespeisten metallurgischen Behälter
16 (soweit Roheisen benötigt wird), werden in der Verfahrensstufe
2 innerhalb der jeweiligen Halle 17a und/oder 17b unter die
Behandlungseinrichtung 18 für das Raffinieren bezüglich Silizium
und Mangan gefahren. Anschließend gelangt der Behälter 16 in der
Verfahrensstufe 3 unter die Behandlungseinrichtung 19, für das
Grobentphosphoren bzw. Grobentschwefeln. Für den Fall der Schrottzugabe ist eine Beschickungsbühne 20 mit kippbaren Schrottmulden
21 und einem Schrottbeschickungskran 22 vorgesehen.

- 7 -

In der Verfahrensstufe 23 wird unter der Zugabevorrichtung 23a
(nicht näher dargestellt) auf einen Phosphorendgehalt raffiniert.
Die Verfahrensstufe 24 dient der Entgasung, Desoxidation bzw. der
Legierung bei entsprechender Vakuumeinrichtung 24a (nicht näher
dargestellt). In der Verfahrensstufe 25 wird die Temperatur durch
Aufblasen von Sauerstoff mittels der Blaslanzenvorrichtung 25a
(nicht näher dargestellt) erhöht. Nach erneutem Weiterbewegen des
Transportfahrzeuges 15 in die Verfahrensstufe 26 erfolgt über die
Entschwefelungsmittel-Zugabevorrichtung 26a (nicht näher
dargestellt) eine Feinentschwefelung auf niedrige Schwefel-
Endgehalte. Schließlich wird entsprechend den Stahlqualitäten in
der Verfahrensstufe 27 und geeigneten Einrichtungsteilen 27a
(nicht näher dargestellt) eine Feinbehandlung durchgeführt.
Unmittelbar daran anschließend hebt ein Gießhallenkran in der
Gießhalle 28 den metallurgischen Behälter 16 in den Pfannendrehturm 29. Der Stahl wird nach Drehen des jeweiligen Pfannendrehturms in Gießstellung 30 in der Strangader 31 oder 32
abgegossen.

- 8 -

0124890

- 8 -

Mannesmann Aktiengesellschaft

Mannesmannufer 2

4000 Düsseldorf

4. Mai 1983

22 608 - Fl/Schi

Verfahren und Einrichtung zum Erzeugen von Stahl

Patentansprüche

1. Verfahren zum Erzeugen von Stahl in mehreren Stufen unter Bilden von Reaktionsschlacken und unter Ein- bzw. Durchblasen von gasförmigem Sauerstoff oder unter Zugabe von Sauerstoffträgern, dadurch gekennzeichnet, daß die Behandlung der Schmelze vom Hochofen (1) bis zur Stranggießanlage (4) auf einer direkten Linie (5 bzw. 6 bzw. 7) in metallurgischen Verfahrensstufen durchgeführt wird und daß ferner der metallurgische Behälter (16) für das Entkohlen bei einem über die Schrottbasis erforderlichen Volumen des metallurgischen Behälters (16), resultierend aus der restlichen Schlackenarbeit, auf einen zusätzlichen Volumenzuschlag abgestellt ist.

. . . . .

22 608 - Fl/Schi                                    4.5.83 **0124890**

2. Verfahren nach Anspruch 1,
   dadurch gekennzeichnet,
   daß bei einem Roheisenanteil von 95 bis 99 % und einem
   Schrottanteil von 1 bis 5 % aus der Schmelze folgende Elemente in
   den einzelnen Stufen entfernt werden: Silizium, Mangan, Phosphor,
   Schwefel, Kohlenstoff, danach die Schmelze desoxidiert, legiert,
   wieder aufgeheizt, entschwefelt und einer Feinbehandlung
   unterzogen wird.

3. Verfahren nach Anspruch 1,
   dadurch gekennzeichnet,
   daß bei einem Schrottanteil von 15 bis 95 % und einem
   Roheisenanteil von 5 bis 85 % aus der Schmelze in einem einzigen
   metallurgischen Behälter folgende Elemente in den einzelnen Stufen
   entfernt werden: Silizium, Mangan, Phosphor, Schwefel, Kohlenstoff
   und danach die Schmelze desoxidiert, legiert, wieder aufgeheizt,
   entschwefelt und einer Feinbehandlung unterzogen wird.

4. Verfahren nach Anspruch 1,
   dadurch gekennzeichnet,
   daß bei einem Schrottanteil von 100 %, Wärme durch Zugabe und
   Verbrennen von Kohlenstoff zugeführt, anschließend aus der
   Schmelze folgende Elemente in den einzelnen Stufen entfernt
   werden: Silizium, Mangan, Phosphor, Schwefel, Kohlenstoff und
   danach die Schmelze desoxidiert, legiert, wieder aufgeheizt,
   entschwefelt und einer Feinbehandlung unterzogen wird.

5. Einrichtung zur Durchführung des Verfahrens nach den Ansprüchen
   1 bis 4,
   dadurch gekennzeichnet,
   daß zwischen dem Hochofen (1) und der Gießbühne (4a) einer Stranggießanlage (4) zumindest ein durchgehendes Gleis (13 bzw. 14)
   vorgesehen ist, auf dem zumindest ein Transportfahrzeug (15) für
   zumindest einen metallurgischen Behälter (16), insbesondere eine
   Stahlpfanne, verfahrbar ist, der ein Volumen aufweist, das dem
   Stahlvolumen und einem Gasvolumen bei größter Frischgeschwindigkeit entspricht.

                                                    . . . . .

6. Einrichtung nach Anspruch 5,

   dadurch gekennzeichnet,

   daß im Verlauf des Gleises (13 bzw. 14) zwischen Hochofen (1) und Stranggießanlage (4) für die selektiven Raffinationsstufen (2,3 bzw. 8 bis 12) jeweils lediglich die für eine bestimmte Raffinationstufe erforderlichen Hilfsmittel, wie z. B. eine heb- und senkbare Sauerstoff-Blaslanze, eine Zugabevorrichtung, eine Vakuumeinrichtung u. dgl., in der erforderlichen Höhenlage angeordnet sind.

7. Einrichtung nach den Ansprüchen 5 und 6,

   dadurch gekennzeichnet,

   daß sich das zusätzlich zum Stahlvolumen vorgesehene Gasvolumen innerhalb des Behälters (16) bzw. der Stahlpfanne nach dem maximalen Wert der Funktion $dCO/dt = f(\Delta V)$ bestimmt.

FIG. 1

2/3

0124890

FIG. 2

FIG. 3

0124890

Europäisches
Patentamt

**EUROPÄISCHER RECHERCHENBERICHT**

**0124890**
Nummer der Anmeldung

EP    84 10 5027

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| Y | EP-A-0 061 749   (NIPPON STEEL CORP.) <br> * Zusammenfassung; Ansprüche * <br><br> --- | 1,6 | C 21 C    5/56 <br> C 21 C    5/28 |
| Y | GB-A-2 072 221   (NIPPON STEEL) <br> *   Zusammenfassung;   Abbildungen 1,2; Ansprüche * <br><br> --- | 1,6 | |
| Y,D | DE-C-2 942 779   (NIPPON STEEL) <br> * Abbildung 1; Ansprüche * <br><br> --- | 1,6 | |
| Y | LU-A-    82 813   (KLÖCKNER) <br> * Ansprüche * <br><br> ----- | 1 | |

RECHERCHIERTE
SACHGEBIETE (Int. Cl. 3)

C 21 C

Der vorliegende Recherchenbericht wurde für alle Patentansprüche erstellt.

| Recherchenort | Abschlußdatum der Recherche | Prüfer |
|---|---|---|
| DEN HAAG | 13-07-1984 | OBERWALLENEY R.P.L.I |